(19) Europäisches Patentamt / European Patent Office / Office européen des brevets

(11) EP 4 325 618 B1

(12) # EUROPEAN PATENT SPECIFICATION

(45) Date of publication and mention of the grant of the patent:
**29.07.2026 Bulletin 2026/31**

(21) Application number: **22904680.0**

(22) Date of filing: **08.12.2022**

(51) International Patent Classification (IPC):
***H01M 10/0565*** (2010.01) ***H01M 10/0567*** (2010.01)
***H01M 10/0568*** (2010.01) ***H01M 10/052*** (2010.01)
***H01M 10/058*** (2010.01)

(52) Cooperative Patent Classification (CPC):
**H01M 10/0565; H01M 10/052; H01M 10/0567; H01M 10/0568; H01M 10/058;** H01M 2300/0082; H01M 2300/0094; Y02E 60/10

(86) International application number:
**PCT/KR2022/019897**

(87) International publication number:
**WO 2023/106851 (15.06.2023 Gazette 2023/24)**

(54) **METHOD FOR PREPARING POLYMER SOLID ELECTROLYTE AND POLYMER SOLID ELECTROLYTE PREPARED THEREBY**

VERFAHREN ZUR HERSTELLUNG EINES POLYMERFESTELEKTROLYTEN UND DAMIT HERGESTELLTER POLYMERFESTELEKTROLYT

PROCÉDÉ DE PRÉPARATION D'ÉLECTROLYTE SOLIDE POLYMÈRE ET ÉLECTROLYTE SOLIDE POLYMÈRE AINSI PRÉPARÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.12.2021 KR 20210175035**
**07.12.2022 KR 20220169918**

(43) Date of publication of application:
**21.02.2024 Bulletin 2024/08**

(73) Proprietor: **LG Energy Solution, Ltd.**
**Seoul 07335 (KR)**

(72) Inventors:
- **LEE, Jung Pil**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2021/193023**
**JP-A- 2001 214 050**
**KR-A- 20140 027 671**
**KR-A- 20160 024 610**
**KR-A- 20210 114 415**
**KR-A- 20210 129 098**
**KR-B1- 101 028 970**
**KR-B1- 101 389 732**
**US-A1- 2016 087 306**
**US-A1- 2023 207 889**
**US-A1- 2023 207 889**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 325 618 B1

## Description

[Technical Field]

One aspect of the present disclosure relates to a method for preparing a polymer solid electrolyte and the polymer solid electrolyte prepared therefrom.

[Background Art]

In terms of the capacity, safety, output, enlargement, microminiaturization, etc. of the batteries, various batteries that can overcome the limitations of current lithium secondary batteries are being studied.
Typically, continuous research is being conducted on a metal-air battery with a very large theoretical capacity in terms of capacity, an all-solid battery with no risk of explosion in terms of safety, a supercapacitor in terms of output, a NaS battery or redox flow battery (RFB) in terms of enlargement, a thin film battery in terms of microminiaturization, etc. compared to a current lithium secondary battery.
Among them, the all-solid battery means a battery in which the liquid electrolyte used in the existing lithium secondary battery is replaced by a solid material, and since the all-solid battery does not use a flammable solvent in the battery, there is no ignition or explosion caused by the decomposition reaction of the conventional electrolyte solution, so safety can be greatly improved. In addition, in the case of the all-solid battery, since Li metal or Li alloy can be used as a material for the negative electrode, there is an advantage that the energy density relative to the mass and volume of the battery can be remarkably improved.
As such, the all-solid battery is attracting attention as a next-generation lithium secondary battery, in terms of safety, high energy density, high output, and simplification of the manufacturing process.
However, in this all-solid battery, since both the electrode and the solid electrolyte are solid and there is no liquid electrolyte, there is a problem that a dead space, that is, a void without ionic conductivity, occurs at the interface between the electrode and the solid electrolyte.
In addition, according to the thin film of the battery, the demand for the solid electrolyte of the thin film is increasing, however, there is a problem that as the solid electrolyte becomes thin, its strength weakens, and thus it is not easy to separate from the release film attached during the manufacturing process, and also the thin film is damaged.
Therefore, there is a demand for the development of a technology capable of producing a solid electrolyte having a uniform thin film form.

[Prior Art Document]

[Patent Document]

(Patent Document 1) Japanese Patent Publication No. 2020-526897
WO2021/193023 A1 discloses a polymer electrolyte solution prepared by mixing lithium bis(fluorosulfonyl)imide with 1-ethly-3-methylimidazoliumbis(fluorosulfonyl)imide, tetrafunctional polyether acrylate, an initiator and dimethoxyethane. The polymer electrolyte solution is applied to a positive electrode.
US2016/087306 A1 discloses adding a polystyrene-b-polyethylene oxide-b-polystyrene block copolymer to anhydrous tetrahydrofuran. Lithium bistrifluoroethanesulfonimide, polyethyleneglycoldiacrylate and 2-hydroxy-2-methyl-1-phenyl propan-1-one are added to the block copolymer including mixture to obtain an electrolyte composition. The electrolyte composition is coated on a substrate.
KR 2014 0027671 A discloses a solid polymer electrolyte. PEG-polyhedral silsesquioxane, acetonitrile and lithium hexafluorophosphate are mixed and casted on a substrate as thin film.
KR 2016 0024610 A discloses a method for manufacturing an electrolyte membrane, the method comprising the steps of preparing a solution by adding, to a solvent, a matrix comprising an ionically conductive polymer and a lithium salt, adding ionic liquid to the solution to prepare a mixed solution, adding a metal-organic frame work to the mixed solution, and then coating a support substrate with the solution.
KR 2021 0114415 A discloses a self-standing film obtained by casting, onto a substrate, a mixture including PVDF, a lithium compound and an ionic liquid electrolyte including LiTFSI.

[Disclosure]

[Technical Problem]

As a result of various studies to solve the above problems, the inventors of one aspect of the present disclosure

confirmed that when preparing a polymer solid electrolyte, if a polymer and a non-volatile liquid compound having poor miscibility with each other are used as raw materials, a liquid phase film and a polymer solid electrolyte film formed by the phase-separation phenomenon that occurs when mixing and drying them are formed, and the polymer solid electrolyte film exhibits the form of a uniform thin film.

Accordingly, it is an object of one aspect of the present disclosure to provide a method for preparing a polymer solid electrolyte in the form of a uniform thin film.

[Technical Solution]

One aspect of the present disclosure relates to a method for preparing a polymer solid electrolyte, comprising the steps of (S1) preparing a solution for forming a polymer solid electrolyte by adding a polymer, a non-volatile liquid phase compound, and a lithium salt to a solvent; (S2) forming a coating layer by applying the solution for forming a polymer solid electrolyte on a substrate; (S3) drying the coating layer to separate the phase into a liquid phase film and a polymer solid electrolyte film; and (S4) separating the polymer solid electrolyte film, wherein the liquid phase film comprises the non-volatile liquid phase compound, and the polymer solid electrolyte film comprises the polymer and lithium salt,

wherein the non-volatile liquid-phase compound is immiscible with the polymer, and
wherein the liquid phase film is formed on the substrate and the polymer solid electrolyte film is formed on the liquid phase film,
wherein the weight ratio of the polymer and the non-volatile liquid-phase compound in the solution is 1:0.8 to 1:5.5,
wherein the polymer comprises one or more selected from the group consisting of polypropylene carbonate (PPC), polyacrylonitrile (PAN), and polyvinylpyrrolidone (PVP),
wherein the non-volatile liquid-phase compound comprises polyhedral oligomeric silsesquioxane (POSS),
wherein the substrate is a thim metal film, and
wherein the weight ratio of the polymer and the lithium salt is 1:0.5 to 1:3.

The POSS may include one or more functional groups (R), wherein the functional group (R) is a functional group comprising one or more elements selected from O, N, S, Si and P, or is a functional group capable of binding to lithium ion.

The functional group may be poly(ethylene glycol) (PEG), alcohol, amine, carboxylic acid, allyl, epoxide, thiol, silane, or silanol

The lithium salt may include one or more selected from the group consisting of LiTFSI(lithium bis(trifluoromethanesulphonyl)imide), LiFSI(Lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, LiC $(CF_3SO_2)_3$, $(CF_3SO_2)_2NLi$, and $(FSO_2)_2NLi$.

The substrate may include one or more selected from the group consisting of Stainless Steel, a Cu foil, and an Al foil.

The coating method may be bar coating, roll coating, spin coating, slit coating, die coating, blade coating, comma coating, slot die coating, lip coating, or solution casting.

The solvent may include one or more selected from the group consisting of propylene carbonate (PC), ethylene carbonate (EC), butylene carbonate (BC), diethyl carbonate (DEC), dimethyl carbonate (DMC), dipropyl carbonate (DPC), methyl propionate (MP), dimethyl sulfoxide, dimethoxyethane, diethoxyethane, tetrahydrofuran, N-methyl-2-pyrrolidone (NMP), ethylmethyl carbonate (EMC), vinylene carbonate (VC), gamma butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The drying of the coating layer may be performed at 150°C or less.

Another aspect of the present disclosure also provides a polymer solid electrolyte, obtainable by the method of the invention, comprising a polymer and a lithium salt.

The thickness of the polymer solid electrolyte is 23 $\mu$m to 35 $\mu$m.

The thickness deviation of the polymer solid electrolyte is 0.7 $\mu$m or less, and the thickness deviation is calculated from a deviation between the thickness at the thickest position and the thickness at the thinnest position among thicknesses measured at a total of 9 designated positions in a sample punched out of the polymer solid electrolyte to a size of 3*3$cm^2$.

The polymer solid electrolyte may be in the form of a free-standing film.

The ionic conductivity of the polymer solid electrolyte is from 1.2 x $10^{-5}$ to 4.5 x $10^{-5}$ S/cm, and the ionic conductivity is measured at 80°C.

The other aspect of the present disclosure also provides an all-solid battery comprising the polymer solid electrolyte.

[Advantageous Effects]

According to one aspect of the present disclosure, in the polymer solid electrolyte preparation process, since a polymer and a non-volatile liquid-phase compound, which are not miscible with each other, are used as raw materials, a polymer solid electrolyte in the form of a uniform thin film can be prepared by forming a laminate formed by laminating a liquid phase film and a polymer solid electrolyte film, and then separating them, by the principle that phase separation occurs when the polymer and the non-volatile liquid-phase compound are mixed, and then dried.
In addition, in the polymer solid electrolyte preparation process, when forming the liquid phase film and the polymer solid electrolyte film on the substrate, and then, separating the polymer solid electrolyte film from the substrate, the polymer solid electrolyte film can be separated without a separate resistance, due to the liquid phase film adjacent to the substrate.

[Description of Drawings]

FIG. 1 is a schematic diagram showing a process for preparing a polymer solid electrolyte according to an example of one aspect of the present disclosure.
FIG. 2 is a schematic diagram showing the structure of the laminate comprising the liquid phase film and the polymer solid electrolyte film formed during the preparation process of the polymer solid electrolyte according to an example of one aspect of the present disclosure.
FIG. 3 is a schematic diagram of a sample for measuring the uniformity of the polymer solid electrolyte prepared according to an example of one aspect of the present disclosure.

[Best Mode]

Hereinafter, the present invention will be described in more detail to help the understanding of the present invention.
The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.
As used herein, the term "miscibility" refers to the property of being immiscible with each other.
As used herein, the term "free-standing film" refers to a film capable of maintaining the shape of a film by itself without a separate support at room temperature and atmospheric pressure.

**Preparation method of polymer solid electrolyte**

One aspect of the present disclosure relates to a method for preparing a polymer solid electrolyte comprising the steps of (S1) preparing a solution for forming a polymer solid electrolyte by adding a polymer, a non-volatile liquid phase compound, and a lithium salt to a solvent; (S2) forming a coating layer by applying the solution for forming a polymer solid electrolyte on a substrate; (S3) drying the coating layer to separate the phase into a liquid phase film and a polymer solid electrolyte film; and (S4) separating the polymer solid electrolyte film; wherein the non-volatile liquid-phase compound is immiscible with the polymer, the liquid phase film comprises the non-volatile liquid-phase compound and the polymer solid electrolyte film comprises the polymer and lithium salt, wherein the liquid phase film is formed on the substrate and the polymer solid electrolyte film is formed on the liquid phase film,

wherein the weight ratio of the polymer and the non-volatile liquid-phase compound in the solution is 1:0.8 to 1:5.5,
wherein the polymer comprises one or more selected from the group consisting of polypropylene carbonate (PPC), polyacrylonitrile (PAN), and polyvinylpyrrolidone (PVP),
wherein the non-volatile liquid-phase compound comprises polyhedral oligomeric silsesquioxane (POSS),
wherein the substrate is a thim metal film, and
wherein the weight ratio of the polymer and the lithium salt is 1:0.5 to 1:3.

In the manufacturing method of the polymer solid electrolyte, a polymer and a non-volatile liquid-phase compound having poor miscibility with each other are used as raw materials. In the case of the polymer and the non-volatile liquid-phase compound, a phenomenon of phase separation occurs during drying after mixing them, and thus a liquid phase film containing the non-volatile liquid-phase compound and a polymer solid electrolyte film containing a

polymer may be formed, and accordingly, after the formation of a laminate formed by laminating the substrate, the liquid phase film, and the polymer solid electrolyte film in the listed order, a polymer solid electrolyte can be obtained by separating the polymer solid electrolyte film. At this time, since the liquid phase film is formed between the substrate and the polymer solid electrolyte film, the polymer solid electrolyte film can be easily separated without resistance.

FIG. 1 is a schematic diagram showing a process for preparing a polymer solid electrolyte according to an example of one aspect of the present disclosure, and FIG. 2 is a schematic diagram showing the structure of the laminate comprising the liquid phase film and the polymer solid electrolyte film formed during the preparation process of the polymer solid electrolyte according to an example of one aspect of the present disclosure.

With reference to these drawings, the preparation method of the polymer solid electrolyte according to one aspect of the present disclosure will be described in detail for each step.

In the present disclosure, in step (S1), a polymer, a non-volatile liquid-phase compound, and lithium salt are added to a solvent to prepare a solution for forming a polymer solid electrolyte.

The polymer may act to form a polymer solid electrolyte in the form of a uniform thin film, without reducing the electrical and ionic conductivity of the polymer solid electrolyte.

The polymer includes one or more selected from the group consisting of polypropylene carbonate (PPC), polyacrylonitrile (PAN) and polyvinylpyrrolidone (PVP).

The non-volatile liquid-phase compound exhibits immiscible properties with respect to the polymer, and thus may be phase-separated from the polymer to form a liquid phase film in the form of a separate layer, during the preparation process of the polymer solid electrolyte.

In addition, the non-volatile liquid-phase compound comprises polyhedral oligomeric silsesquioxane (POSS).

The POSS is a polyhedral oligosilsesquioxane, containing one or more functional groups (R), wherein the functional group (R) is a functional group comprising one or more elements selected from O, N, S, Si and P, or comprises a functional group capable of binding to lithium ion. For example, the functional group (R) may be poly(ethylene glycol) (PEG), alcohol, amine, carboxylic acid, allyl, epoxide, thiol, silane, silanol, silanol, glycidyl, octasilane or methacryl.

In addition, the POSS may be PEG-POSS including poly(ethylene glycol) (PEG) as afunctional group, and, when the PEG-POSS is used, the phase-separation may be smoothly processed. For example, when the PPC and PEG-POSS are used, the phase-separation may be smoothly processed and thus process efficiency may be enhanced.

In addition, POSS may be solid phase or liquid phase according to the functional group (R). The POSS of liquid phase may be favorable so that the phase-separation from the polymer is smoothly process. The POSS of liquid phase may have the above functional group(R), and preferably the POSS of liquid phase may be PEG-POSS.

In one aspect of the present disclosure, the POSS of liquid phase may be shown the below chemical formula 1.

[chemical formula 1]

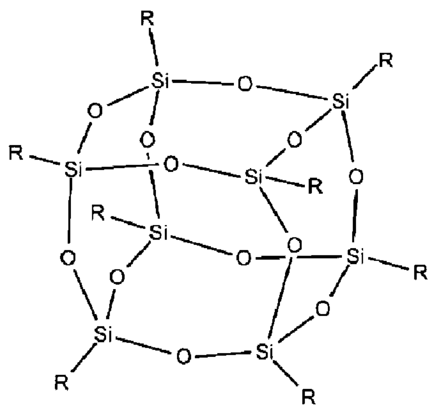

In the chemical formula 1,

R is same or different each other, and is selected from the group consisting of the below chemical 1-1 to 1-4:

[chemical formula 1-1]

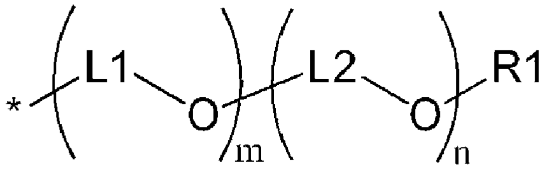

[chemical formula 1-2]

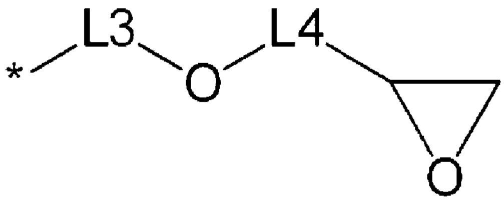

[chemical formula 1-3]

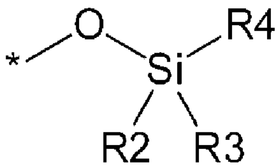

[chemical formula 1-4]

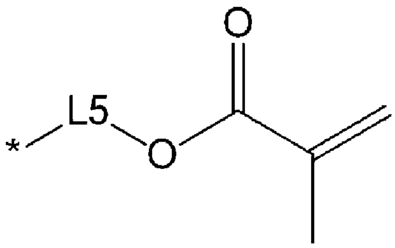

In the chemical formula 1-1 to 1-4,
L1 to L5 are C1 to C30 alkylene group,
R1 to R4 are selected from the group consisting of hydrogen; hydroxy group; amino group; thiol group; C1 to C30 alkyl group; C2 to C30 alkenyl group; C2 to C30 alkynyl group; C1 to C30 alkoxy group; and C1 to C30 carboxyl group,
m and n are same or different each other and are independently an integer of 0 to 10,
* is a bonding site.

In a specific embodiment of one aspect of the present disclosure, L1 to L5 are C1 to C30 alkylene group, R1 to R4 are selected from the group consisting of hydrogen; hydroxy group; or C1 to C30 alkyl group, and m and n are same or different each other and are independently an integer of 0 to 1 in the chemical formula 1-1 to 1-4.

In a specific embodiment of one aspect of the present disclosure, the functional group R in the chemical formula 1 is selected from the group consisting of poly(ethylene glycol) group, glycidyl group, octa silane group, and metacryl group.

The lithium salt can impart ionic conductivity to the polymer solid electrolyte, and can improve ionic conductivity without reducing the electrical conductivity by the electrical conductivity polymer.

In addition, the lithium salt may comprise one or more selected from the group consisting of LiTFSI (lithium bis(trifluoromethanesulphonyl)imide), LiFSI(Lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, LiC $(CF_3SO_2)_3$, $(CF_3SO_2)_2NLi$, $(FSO_2)_2NLi$, chloroborane lithium, lower aliphatic carboxylic acid lithium, and 4-phenylboric acid lithium.

The weight ratio of the polymer and the non-volatile liquid-phase compound is 1:0.8 to 1:5.5, specifically, 1:0.8 or less, 1:0.9 or less, or 1:1 or less, and 1:5 or more, 1:5.2 or more, or 1:5.5 or more. If the weight ratio exceeds 1:0.8, the content of the polymer is excessively increased, so that a phenomenon of phase separation does not occur, a polymer solid

electrolyte in the form of a free-standing film is prepared in a state where the polymer and the non-volatile liquid-phase compound are simply mixed, and the uniformity and ionic conductivity of the polymer solid electrolyte may be reduced. In addition, if the weight ratio is less than 1:5.5, the content of the non-volatile liquid-phase compound is excessively increased, so that a solid polymer electrolyte is not prepared, and an electrolyte of the liquid phase may be prepared.

In addition, the weight ratio of the polymer and the lithium salt is 1:0.5 to 1:3, specifically, 1:0.5 or less, 1:0.6 or less, or 1:0.7 or less, and 1:1.5 or more, 1:2 or more, or 1:3 or more. If the weight ratio exceeds 1:0.5, the content of the polymer may be excessively increased, so that the ionic conductivity of the polymer solid electrolyte may be reduced. If the weight ratio is less than 1:3, the content of the lithium salt may be excessively increased, so that the polymer electrolyte film may not be formed.

The solvent is not particularly limited as long as it is a solvent used in the preparation of an electrolyte in the art. For example, the solvent may comprise one or more selected from the group consisting of propylene carbonate (PC), ethylene carbonate (EC), butylene carbonate (BC), diethyl carbonate (DEC), dimethyl carbonate (DMC), dipropyl carbonate (DPC), methyl propionate (MP), dimethyl sulfoxide, dimethoxyethane, diethoxyethane, tetrahydrofuran, N-methyl-2-pyrrolidone (NMP), ethylmethyl carbonate (EMC), vinylene carbonate (VC), gamma butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The concentration of the solution for forming the polymer solid electrolyte is not particularly limited as long as the concentration is sufficient to perform the coating process. For example, the concentration of the solution for forming the polymer solid electrolyte may be 10 to 40% by weight, specifically 10% by weight or more, 15% by weight or more or 20% by weight or more, and 30 % by weight or less, 35 % by weight or less or 40 % by weight or less. The concentration may be appropriately adjusted to a concentration sufficient to perform the coating process within the above range.

In addition, the solution for forming the polymer solid electrolyte is in a form in which a liquid moiety and a polymer chain are mixed.

The liquid moiety is derived from the non-volatile liquid-phase compound, and the polymer chain is derived from the polymer. Since the non-volatile liquid-phase compound and the polymer are immiscible with each other, the non-volatile liquid-phase compound and the polymer are present in a solution while being separated from each other.

In the present disclosure, in step (S2), the solution for forming the polymer solid electrolyte is applied on a substrate to form a coating layer.

The substrate may be in the form of a foil, and the foil may be in the form of a thin film of a metal such as aluminum, copper, or Stainless Steel. By using the foil in the form of a metal thin film as the substrate, it may be advantageous for the preparation of a solid electrolyte in the form of a free-standing film.

In addition, the coating method may be bar coating, roll coating, spin coating, slit coating, die coating, blade coating, comma coating, slot die coating, lip coating, or solution casting, but is not limited thereto as long as it is a coating method capable of forming a coating layer on the substrate.

In the present disclosure, in step (S3), the coating layer is dried, and the coating layer is phase-separated into a liquid phase film and a polymer electrolyte film.

The drying is not particularly limited as long as it is a drying method that can induce phase-separation of the liquid moiety and the polymer chain contained in the coating layer. For example, the drying may be performed at 150°C or less, 130°C or less, or 110°C or less.

The phase-separation may occur due to the characteristic that the polymer and the non-volatile liquid-phase compound which are raw materials are immiscible with each other.

As shown in FIG. 2, the liquid phase film 20 comprising the non-volatile liquid-phase compound may be formed on the substrate 10, and the polymer solid electrolyte film 30 comprising the polymer and lithium salt may be formed on the liquid phase film 20.

In the present disclosure, in step (S4), the polymer solid electrolyte film is separated.

In general, as the polymer solid electrolyte film is thinned, the strength is weakened, and thus it may be difficult to separate from the substrate. However, since the liquid phase film is formed between the substrate and the polymer solid electrolyte film in step (S3), the polymer solid electrolyte film can be separated from the substrate without a separate resistance.

In addition, after separating the polymer solid electrolyte film, a washing step is performed to remove any remianing non-volatile liquid-phase compound on the the polymer solid electrolyte film.

**Polymer solid electrolyte**

Another aspect of the present disclosure also provides a polymer solid electrolyte prepared by the method for preparing a polymer solid electrolyte as described above.

The polymer solid electrolyte includes a polymer and a lithium salt. The type and weight ratio of the polymer and the lithium salt are the same as described above.

In the present disclosure, the thickness of the polymer solid electrolyte is 23 μm to 35 μm, and may be reduced compared to the general polymer solid electrolyte, thereby representing the form of a thin-film solid electrolyte. If the thickness is less than 23 μm, the durability of the polymer solid electrolyte may be lowered. If the thickness exceeds 35 μm, it may act as a resistance during operation of the battery.

In addition, the thickness deviation of the polymer solid electrolyte is 0.7 μm or less. Within the above range, the smaller the thickness deviation, the better the uniformity. If the thickness deviation exceeds 0.7 μm, the uniformity of the polymer solid electrolyte is not good. For example, in the case of the thickness deviation, for the sample punched out of the polymer solid electrolyte to a size of 3*3cm$^2$, the thickness was measured at a total of 9 designated positions, and then the deviation between the thickness at the thickest position and the thickness at the thinnest position was calculated. It was judged that the smaller the deviation of the calculated thickness, the more uniform.

In another aspect of the present disclosure, the polymer solid electrolyte may be in the form of a free-standing film.

The polymer solid electrolyte in the form of a free-standing film maintains the form of a film by itself at room temperature and atmospheric pressure, and thus can be applied to various applications.

In another aspect of the present disclosure, the ionic conductivity of the polymer solid electrolyte may be from 1.2 x $10^{-5}$ to 4.5 x $10^{-5}$ S/cm, and the ionic conductivity is measured at 80°C. When the polymer solid electrolyte with the ionic conductivity is applied to an all-solid battery, stability of the battery is enhanced and performance and life span of the battery are improved.

**All-solid battery**

The other aspect of the present disclosure also relates to an all-solid battery comprising the polymer solid electrolyte described above, wherein the all-solid battery may comprise a positive electrode, a negative electrode, and the polymer solid electrolyte interposed therebetween.

In addition, the polymer solid electrolyte may be applied to the electrode, and thus may be comprised in an all-solid battery in a state of being attached to one surface of the positive electrode or the negative electrode.

In the other aspect of the present disclosure, the positive electrode comprises a positive electrode current collector and a positive electrode active material layer formed on the positive electrode current collector.

The positive electrode active material layer comprises a positive electrode active material, a binder, and an electrically conductive material.

The positive electrode active material is not particularly limited as long as it is a material capable of reversibly intercalating and de-intercalating lithium ions, for example, may be, but is not limited to, layered compounds or compounds substituted with one or more transition metals, such as lithium cobalt oxide ($LiCoO_2$), lithium nickel oxide ($LiNiO_2$), Li $[Ni_xCo_yMn_zM_v]O_2$ (wherein, M is any one or two or more elements selected from the group consisting of Al, Ga and In; $0.3 \leq x < 1.0$, $0 \leq y, z \leq 0.5$, $0 \leq v \leq 0.1$, $x+y+z+v=1$), $Li(Li_aM_{b-a-b'}M'_{b'})O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula $Li_{1+y}Mn_{2-y}O_4$ (wherein, y is 0 - 0.33), $LiMnO_3$, $LiMn_2O_3$ and $LiMnO_2$; lithium copper oxide ($Li_2CuO_2$); vanadium oxide such as $LiV_3O_8$, $LiFe_3O_4$, $V_2O_5$ and $Cu_2V_2O_7$; Ni site type lithium nickel oxide represented by Formula $LiNi_{1-y}MyO_2$ (wherein, M=Co, Mn, Al, Cu, Fe, Mg, B or Ga, y=0.01 - 0.3); lithium manganese composite oxide represented by Formula $LiMn_{2-y}M_yO_2$ (wherein, M=Co, Ni, Fe, Cr, Zn or Ta, y=0.01 - 0.1) or $Li_2Mn_3MO_8$ (wherein, M=Fe, Co, Ni, Cu or Zn); disulfide compounds; $Fe_2(MoO_4)_3$.

The positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the electrically conductive material, and assists in bonding to the current collector. The binder may comprise one or more selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode may be lowered. If the content of the binder exceeds 30% by weight, the adhesive force is improved, but the content of the positive electrode active material is reduced by that amount, and thus the capacity of the battery may be lowered.

In addition, the electrically conductive material is not particularly limited as long as it has excellent electrical conductivity without causing side reactions in the internal environment of the all-solid battery and without causing chemical changes in the battery. The electrically conductive material may be typically graphite or conductive carbon, for example, as the electrically conductive material, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more thereof, but is not necessarily limited thereto.

The electrically conductive material may be generally contained in an amount of 0.5% by weight to 30% by weight based on the total weight of the positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5 % by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the electrically conductive material and the binder in an solvent, onto the positive electrode current collector, and optionally compression-molding it onto the positive electrode current collector to improve the positive electrode density. At this time, as the solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like are exemplified.

In the other aspect of the present disclosure, the negative electrode comprises a negative electrode current collector and a negative electrode active material layer formed on negative electrode current collector. The negative electrode active material layer comprises a negative electrode active material, a binder, and an electrically conductive material.

The negative electrode active material may be a material capable of reversibly intercalating or de-intercalating lithium ion ($Li^+$), a material capable of reacting with lithium ion to reversibly form a lithium-containing compound, lithium metal, or a lithium alloy.

The material capable of reversibly intercalating or de-intercalating lithium ion ($Li^+$) may be, for example, crystalline carbon, amorphous carbon, or mixtures thereof. The material capable of reacting with lithium ion ($Li^+$) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the electrically conductive material is the same as described above for the positive electrode active material layer.

In addition, the negative electrode current collector is not particularly limited as long as it has electrical conductivity without causing chemical change in the battery, for example, may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having a fine irregularity structure on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

The manufacture of the all-solid battery having the above configuration is not particularly limited in the present invention, and a known method may be used.

When manufacturing the all-solid battery of the present invention, electrodes comprising the positive electrode and the negative electrode are arranged, and then press-molded to assemble a cell.

The assembled cell is installed in the exterior material, and then sealed by heat compression or the like. As the exterior material, a laminate pack made of aluminum or stainless steel, and a cylindrical or rectangular metal container are very suitable.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

In the following Examples and Comparative Examples, solid electrolytes were prepared according to the type and weight ratio of the substrate, the polymer, the lithium salt, and the solvent as shown in Table 1 below.

Table 1:

| | Polymer solid electrolyte | | | | | Solvent |
|---|---|---|---|---|---|---|
| | Substrate | Polymer | Non-volatile liquid-phase compound | Weight ratio (PPC:POSS) | Lithium salt | |
| Example 1 | SS Foil | PPC | PEG-POSS | 1:1 | LiTFSI | NMP |
| Example 2 | SS Foil | PPC | PEG-POSS | 1:2 | LiTFSI | NMP |
| Example 3 | SS Foil | PPC | PEG-POSS | 1:5 | LiTFSI | NMP |
| Comparative Example 1 | SS Foil | PPC | - | - | LiTFSI | NMP |
| Comparative Example 2 | PET release film | PPC | - | - | LiTFSI | NMP |
| Comparative Example 3 | SS Foil | PPC | PEG-POSS | 1:6 | LiTFSI | NMP |
| Comparative Example 4 | SS Foil | PPC | PEG-POSS | 1:0.5 | LiTFSI | NMP |

**Example 1**

As raw materials for preparing a polymer solid electrolyte, polypropylene carbonate (PPC) which is the polymer, poly(ethyleneglycol)-polyhedral oligomeric silsesquioxane (PEG-POSS) which is the non-volatile liquid-phase compound, LiTFSI which is the lithium salt, and NMP which is the solvent were prepared. The weight ratio of polypropylene carbonate (PPC) which is the polymer, poly(ethyleneglycol)-polyhedral oligomeric silsesquioxane(PEG-POSS) which is the non-volatile liquid-phase compound, and LiTFSI which is the lithium salt was set to 1:1:1.

The polymer, the non-volatile liquid-phase compound, and the lithium salt were added to the solvent and mixed to prepare a solution for forming a polymer solid electrolyte at a concentration of 20%.

The solution for forming the polymer solid electrolyte was bar-coated on a Stainless Steel(SS) Foil, which is the substrate, to form a coating layer.

Thereafter, the coating layer was vacuum-dried at 100°C. During drying, phase-separation was occurred, so that a laminate, in which a liquid phase film comprising the non-volatile liquid-phase compound and a polymer solid electrolyte film comprising the polymer and lithium salt on the SS Foil are sequentially laminated, was manufactured. By separating the SS Foil from the laminate, a polymer solid electrolyte comprising a liquid phase film and a polymer solid electrolyte film formed on the liquid phase film was obtained.

**Example 2**

A polymer solid electrolyte was prepared in the same manner as in Example 1, except that the weight ratio of PPC and PEG-POSS used as the polymer and the non-volatile liquid-phase compound is set to 1:2.

**Example 3**

A polymer solid electrolyte was prepared in the same manner as in Example 1, except that the weight ratio of PPC and PEG-POSS used as the polymer and the non-volatile liquid-phase compound is set to 1:5.

**Comparative Example 1**

A polymer solid electrolyte was prepared in the same manner as in Example 1, except that the non-volatile liquid-phase compound is not used.

**Comparative Example 2**

A polymer solid electrolyte was prepared in the same manner as in Example 1, except that the non-volatile liquid-phase compound is not used, and a PET (polyethylene terephthalate) release film is used instead of the SS Foil as a substrate.

**Comparative Example 3**

A polymer solid electrolyte was prepared in the same manner as in Example 1, except that the weight ratio of PPC and PEG-POSS used as the polymer and the non-volatile liquid-phase compound is set to 1:6.

**Comparative Example 4**

A polymer solid electrolyte was prepared in the same manner as in Example 1, except that the weight ratio of PPC and PEG-POSS used as the polymer and the non-volatile liquid-phase compound is set to 1:0.5.

**Experimental Example 1: Evaluation of polymer solid electrolyte**

For the polymer solid electrolytes prepared in the Examples and the Comparative Examples, possibility of the form of a free-standing film, and thickness, uniformity, and ionic conductivity of the free-standing film were measured in the following way, and the results are shown in Table 2 below.

(1) Possibility of form of free-standing film

By confirming whether the polymer solid electrolyte film is separated from the substrate and can be obtained as a film, it was evaluated whether the form of a free-standing film of the polymer solid electrolyte is possible.

(2) Thickness

As shown in FIG. 3, for a sample punched out of the prepared polymer solid electrolyte to a size of 3*3cm$^2$, the

average thickness was calculated by measuring the thickness at a total of 9 designated positions.

(3) Uniformity

The deviation between the thicknesses was calculated by the total measured values of the thicknesses of a total of 9 designated positions obtained in the item (2) above. It was judged that the smaller the deviation of the calculated thickness, the more uniform.

(4) Ionic conductivity

The sample of the polymer solid electrolyte obtained in item (3) was brought into contact with a SS metal electrode having the same surface area as the sample, and then, an alternating voltage was applied through the electrodes on both sides of the sample at room temperature. At this time, as an applied condition, a measurement frequency was set in an amplitude range of 0.01Hz to 1MHz, and impedance was measured using VMP3 from BioLogic company. The resistance of the polymer solid electrolyte was obtained from the intersection (Rb) where the semicircle or straight line of the measured impedance trajectory meets the real axis, and the ionic conductivity of the polymer solid electrolyte was calculated from the width and thickness of the sample.

[Equation 1]

$$\sigma\ (S \cdot cm^{-1}) = \frac{1}{R_b}\frac{t}{A}$$

σ: Ionic conductivity
Rb: Intersection with the real axis of the impedance trajectory
A: Width of the sample
t: Thickness of the sample

Table 2:

| | Possibility of form of free-standing film | Average thickness (μm) | Uniformity (deviation, μm) | Ionic conductivity (S/cm@80°C) |
|---|---|---|---|---|
| Example 1 | possible | 28.8 | 0.63 | 1.2 E-05 |
| Example 2 | possible | 32.3 | 0.67 | 2.6 E-05 |
| Example 3 | possible | 24.7 | 0.47 | 4.5 E-05 |
| Comparative Example 1 | impossible | - | - | - |
| Comparative Example 2 | possible | 21.6 | 1. 42 | 1.1 E-05 |
| Comparative Example 3 | impossible (existing as Liquid, not as a membrane) | not measurable | not measurable | - |
| Comparative Example 4 | possible (no phase-separation) | 20.2 | 1.13 | - |

As shown in Table 2, it was confirmed that the polymer solid electrolytes of Examples 1 to 3 prepared by using PPC, which is the polymer and PEG-POSS, which is the non-volatile liquid-phase compound, in an appropriate weight ratio are prepared in the form of a free-standing film. In addition, it can be seen that the polymer solid electrolytes of Examples 1 to 3 are prepared uniformly with a small thickness deviation, and it was confirmed that they had excellent ionic conductivity. In addition, Comparative Example 1 is a polymer solid electrolyte prepared without using a non-volatile liquid-phase compound, and it was not prepared in the form of a free-standing film, and thus the thickness and ionic conductivity could not be measured.

In addition, Comparative Example 2 is a polymer solid electrolyte prepared without using a non-volatile liquid-phase compound and with using a PET release film instead of a SS Foil as a substrate, and it was confirmed that it was manufactured in the form of a free-standing film, but the uniformity was not good due to the large thickness deviation, and the ionic conductivity was also relatively lowered compared to Examples 1 to 3. In general, in the case of PET release film, it is relatively easy to separate the electrolyte film after drying due to low adhesion with the electrolyte film prepared on metal foil, as compared to metal foils such as SS, Cu, or Al, but if the strength of the electrolyte film is weak, it may be torn or deformed by stretching, which may eventually make it difficult to use.

On the other hand, in the case of Comparative Example 3, PEG-POSS, which is the non-volatile liquid-phase compound, was used excessively compared to PPC, which is the polymer, so that it was not prepared in the form of a film, but existed in the state of a liquid phase. Accordingly, the thickness, uniformity and ionic conductivity could not be measured.

In addition, it was confirmed that in the case of Comparative Example 4, PEG-POSS, which is a non-volatile liquid-phase compound, is used too little compared to PPC, which is a polymer, so that phase-separation of the polymer and the non-volatile liquid-phase compound did not occur, and thus a film was formed in a state in which the polymer and the non-volatile liquid-phase compound were mixed, and the uniformity was not good due to a large thickness deviation.

From these results, it was confirmed that by using a polymer and a non-volatile liquid-phase compound, which are not compatible with each other, in an appropriate weight ratio, when preparing a polymer solid electrolyte using the phase-separation of the polymer and the non-volatile liquid-phase compound, a polymer solid electrolyte in the form of a free-standing film comprising a liquid phase film and a polymer solid electrolyte film, which is formed by phase-separation of the polymer and the non-volatile liquid-phase compound, is prepared, and it has excellent uniformity and ionic conductivity.

[Description of symbol]

1: Polymer solid electrolyte
10: Substrate
20: Liquid phase film
30: Polymer solid electrolyte film

## Claims

1. A method for preparing a polymer solid electrolyte comprising the steps of,

    (S1) preparing a solution for forming a polymer solid electrolyte by adding a polymer, a non-volatile liquid phase compound, and a lithium salt to a solvent;
    (S2) forming a coating layer by applying the solution for forming a polymer solid electrolyte on a substrate;
    (S3) drying the coating layer to separate the phase into a liquid phase film and a polymer solid electrolyte film; and
    (S4) separating the polymer solid electrolyte film,
    wherein the liquid phase film comprises the non-volatile liquid phase compound, and the polymer solid electrolyte film comprises the polymer and lithium salt,
    wherein the non-volatile liquid-phase compound is immiscible with the polymer, and
    wherein the liquid phase film is formed on the substrate and the polymer solid electrolyte film is formed on the liquid phase film,
    wherein the weight ratio of the polymer and the non-volatile liquid-phase compound in the solution is 1:0.8 to 1:5.5,
    wherein the polymer comprises one or more selected from the group consisting of polypropylene carbonate (PPC), polyacrylonitrile (PAN), and polyvinylpyrrolidone (PVP),
    wherein the non-volatile liquid-phase compound comprises polyhedral oligomeric silsesquioxane (POSS),
    wherein the substrate is a thim metal film, and
    wherein the weight ratio of the polymer and the lithium salt is 1:0.5 to 1:3.

2. The method for preparing a polymer solid electrolyte according to claim 1,

    wherein the POSS comprises one or more functional groups (R), wherein the functional group (R) is a functional group comprising one or more elements selected from O, N, S, Si and P, or is a functional group capable of binding to lithium ion, and
    wherein the functional group is poly(ethylene glycol) (PEG), alcohol, amine, carboxylic acid, allyl, epoxide, thiol, silane, or silanol.

3. The method for preparing a polymer solid electrolyte according to claim 1, wherein the lithium salt comprises one or more selected from the group consisting of LiTFSI(lithium bis(trifluoromethanesulphonyl)imide), LiFSI(Lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, LiC $(CF_3SO_2)_3$, $(CF_3SO_2)_2NLi$, and $(FSO_2)_2NLi$.

4. The method for preparing a polymer solid electrolyte according to claim 1, wherein the substrate comprises one or more selected from the group consisting of Stainless Steel, a Cu foil, and an Al foil.

5. The method for preparing a polymer solid electrolyte according to claim 1, wherein the coating method is bar coating, roll coating, spin coating, slit coating, die coating, blade coating, comma coating, slot die coating, lip coating, or solution casting.

6. The method for preparing a polymer solid electrolyte according to claim 1, wherein the solvent comprises one or more selected from the group consisting of propylene carbonate (PC), ethylene carbonate (EC), butylene carbonate (BC), diethyl carbonate (DEC), dimethyl carbonate (DMC), dipropyl carbonate (DPC), methyl propionate (MP), dimethyl sulfoxide, dimethoxyethane, diethoxyethane, tetrahydrofuran, N-methyl-2-pyrrolidone (NMP), ethylmethyl carbonate (EMC), vinylene carbonate (VC), gamma butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

7. The method for preparing a polymer solid electrolyte according to claim 1, wherein the drying of the coating layer is performed at 150°C or less.

8. A polymer solid electrolyte, obtainable by a method according to claim 1, comprising a polymer and a lithium salt,

wherein thickness of the polymer solid electrolyte is 23 $\mu$m to 35 $\mu$m, and
wherein the thickness deviation of the polymer solid electrolyte is 0.7 $\mu$m or less, and the thickness deviation is calculated from a deviation between the thickness at the thickest position and the thickness at the thinnest position among thicknesses measured at a total of 9 designated positions in a sample punched out of the polymer solid electrolyte to a size of $3*3cm^2$.

9. The polymer solid electrolyte according to claim 8, wherein the polymer solid electrolyte is in the form of a free-standing film,
wherein ionic conductivity of the polymer solid electrolyte is from $1.2 \times 10^{-5}$ to $4.5 \times 10^{-5}$ S/cm, and the ionic conductivity is measured at 80°C.

10. An all-solid battery comprising the polymer solid electrolyte of claim 8.

## Patentansprüche

1. Verfahren zur Herstellung eines polymeren Festelektrolyten, umfassend die Schritte,

(S1) Herstellen einer Lösung zur Bildung eines polymeren Festelektrolyten durch Zugabe eines Polymers, einer nichtflüchtigen Flüssigphasenverbindung und eines Lithiumsalzes zu einem Lösungsmittel;
(S2) Bilden einer Überzugsschicht durch Aufbringen der Lösung zur Bildung eines polymeren Festelektrolyten auf ein Substrat;
(S3) Trocknen der Überzugsschicht, um die Phase in einen Flüssigphasenfilm und einen polymeren Festelektrolytfilm zu trennen; und
(S4) Trennen des polymeren Festelektrolytfilms,
wobei der Flüssigphasenfilm die nichtflüchtige Flüssigphasenverbindung umfasst und der polymere Festelektrolytfilm das Polymer und Lithiumsalz umfasst,
wobei die nichtflüchtige Flüssigphasenverbindung mit dem Polymer nicht mischbar ist, und
wobei der Flüssigphasenfilm auf dem Substrat gebildet wird und der polymere Festelektrolytfilm auf dem Flüssigphasenfilm gebildet wird,
wobei das Gewichtsverhältnis des Polymers und der nichtflüchtigen Flüssigphasenverbindung in der Lösung 1:0,8 bis 1:5,5 beträgt,
wobei das Polymer eines oder mehrere ausgewählt aus der Gruppe bestehend aus Polypropylencarbonat

(PPC), Polyacrylnitril (PAN) und Polyvinylpyrrolidon (PVP) umfasst,
wobei die nichtflüchtige Flüssigphasenverbindung polyedrisches oligomeres Silsesquioxan (POSS) umfasst,
wobei das Substrat ein dünner Metallfilm ist, und
wobei das Gewichtsverhältnis des Polymers und des Lithiumsalzes 1:0,5 bis 1:3 beträgt.

**2.** Verfahren zur Herstellung eines polymeren Festelektrolyten nach Anspruch 1,

wobei das POSS eine oder mehrere funktionelle Gruppen (R) umfasst, wobei die funktionelle Gruppe (R) eine funktionelle Gruppe ist, die ein oder mehrere Elemente ausgewählt aus O, N, S, Si und P umfasst, oder eine funktionelle Gruppe ist, die in der Lage ist, an Lithiumion zu binden, und
wobei die funktionelle Gruppe Poly(ethylenglycol) (PEG), Alkohol, Amin, Carbonsäure, Allyl, Epoxid, Thiol, Silan oder Silanol ist.

**3.** Verfahren zur Herstellung eines polymeren Festelektrolyten nach Anspruch 1, wobei das Lithiumsalz eines oder mehrere ausgewählt aus der Gruppe bestehend aus LiTFSI (Lithiumbis(trifluormethansulfonyl)imid), LiFSI (Lithiumbis(fluorsulfonyl)imid), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2NLi$ und $(FSO_2)_2NLi$ umfasst.

**4.** Verfahren zur Herstellung eines polymeren Festelektrolyten nach Anspruch 1, wobei das Substrat eines oder mehrere ausgewählt aus der Gruppe bestehend aus Edelstahl, einer Cu-Folie und einer Al-Folie umfasst.

**5.** Verfahren zur Herstellung eines polymeren Festelektrolyten nach Anspruch 1, wobei das Beschichtungsverfahren Stabbeschichten, Walzenbeschichten, Rotationsbeschichten, Schlitzbeschichten, Düsenbeschichten, Rakelbeschichten, Kommabeschichten, Schlitzdüsenbeschichten, Lippenbeschichten oder Lösungsgießen ist.

**6.** Verfahren zur Herstellung eines polymeren Festelektrolyten nach Anspruch 1, wobei das Lösungsmittel eines oder mehrere ausgewählt aus der Gruppe bestehend aus Propylencarbonat (PC), Ethylencarbonat (EC), Butylencarbonat (BC), Diethylcarbonat (DEC), Dimethylcarbonat (DMC), Dipropylcarbonat (DPC), Methylpropionat (MP), Dimethylsulfoxid, Dimethoxyethan, Diethoxyethan, Tetrahydrofuran, N-Methyl-2-pyrrolidon (NMP), Ethylmethylcarbonat (EMC), Vinylencarbonat (VC), gamma-Butyrolacton (GBL), Fluorethylencarbonat (FEC), Methylformiat, Ethylformiat, Propylformiat, Methylacetat, Ethylacetat, Propylacetat, Pentylacetat, Methylpropionat, Ethylpropionat, Ethylpropionat und Butylpropionat umfasst.

**7.** Verfahren zur Herstellung eines polymeren Festelektrolyten nach Anspruch 1, wobei das Trocknen der Überzugsschicht bei 150 °C oder weniger durchgeführt wird.

**8.** Polymerer Festelektrolyt, erhältlich durch ein Verfahren nach Anspruch 1, umfassend ein Polymer und ein Lithiumsalz,

wobei die Dicke des polymeren Festelektrolyten 23 $\mu$m bis 35 $\mu$m beträgt, und
wobei die Dickenabweichung des polymeren Festelektrolyten 0,7 $\mu$m oder weniger beträgt, und die Dickenabweichung aus einer Abweichung zwischen der Dicke an der dicksten Position und der Dicke an der dünnsten Position unter Dicken, gemessen an insgesamt 9 bezeichneten Positionen in einer Probe, die aus dem polymeren Festelektrolyten ausgestanzt wurde, auf eine Größe von 3*3 $cm^2$ berechnet wird.

**9.** Polymerer Festelektrolyt nach Anspruch 8, wobei der polymere Festelektrolyt in Form eines freistehenden Films vorliegt,
wobei die Ionenleitfähigkeit des polymeren Festelektrolyten 1,2 x $10^{-5}$ bis 4,5 x $10^{-5}$ S/cm beträgt, und die Ionenleitfähigkeit bei 80 °C gemessen wird.

**10.** Feststoffbatterie, umfassend den polymeren Festelektrolyten nach Anspruch 8.

## Revendications

**1.** Procédé de préparation d’un électrolyte solide polymère, comprenant les étapes suivantes :

(S1) préparation d’une solution servant à former un électrolyte solide polymère par addition d’un polymère, d’un

composé non volatil en phase liquide et d'un sel de lithium dans un solvant ;
(S2) formation d'une couche de revêtement par application sur un substrat de la solution servant à former un électrolyte solide polymère ;
(S3) séchage de la couche de revêtement pour séparer la phase en un film en phase liquide et un film d'électrolyte solide polymère ; et
(S4) séparation du film d'électrolyte solide polymère,
où le film en phase liquide comprend le composé non volatil en phase liquide et le film d'électrolyte solide polymère comprend le polymère et le sel de lithium,
où le composé non volatil en phase liquide est immiscible avec le polymère et
où le film en phase liquide est formé sur le substrat et où le film d'électrolyte solide polymère est formé sur le film en phase liquide,
où le rapport en poids entre le polymère et le composé non volatil en phase liquide dans la solution va de 1:0,8 à 1:5,5,
où le polymère comprend un ou plusieurs sélectionnés dans le groupe consistant en un poly(carbonate de propylène) (PPC), un polyacrylonitrile (PAN) et une polyvinylpyrrolidone (PVP),
où le composé non volatil en phase liquide comprend un silsesquioxane oligomère polyédrique (POSS),
où le substrat est un film métallique fin et
où le rapport en poids entre le polymère et le sel de lithium va de 1:0,5 à 1:3.

2. Procédé de préparation d'un électrolyte solide polymère selon la revendication 1,

où le POSS comprend un ou plusieurs groupements fonctionnels (R), le groupement fonctionnel (R) étant un groupement fonctionnel qui comprend un ou plusieurs éléments sélectionnés parmi O, N, S, Si et P ou un groupement fonctionnel capable de se lier à un ion lithium et
où le groupement fonctionnel est un poly(éthylène glycol) (PEG), un alcool, une amine, un acide carboxylique, un allyle, un époxyde, un thiol, un silane ou un silanol.

3. Procédé de préparation d'un électrolyte solide polymère selon la revendication 1, où le sel de lithium comprend un ou plusieurs sélectionnés dans le groupe consistant en les suivants : LiTFSI (bis(trifluorométhanesulphonyl)imide de lithium), LiFSI (bis(fluorosulfonyl)imide de lithium), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, LiC $(CF_3SO_2)_3$, $(CF_3SO_2)_2NLi$ et $(FSO_2)_2NLi$.

4. Procédé de préparation d'un électrolyte solide polymère selon la revendication 1, où le substrat comprend un ou plusieurs sélectionnés dans le groupe consistant en un acier inoxydable, une feuille de Cu et une feuille d'Al.

5. Procédé de préparation d'un électrolyte solide polymère selon la revendication 1, où le procédé de revêtement est l'un des suivants : couchage à la barre, revêtement au rouleau, enduction centrifuge, revêtement divisé, enduction par filière, couchage à la lame, revêtement par lame virgule, enduction par filière à fente, dépôt par bec ou coulée en solution.

6. Procédé de préparation d'un électrolyte solide polymère selon la revendication 1, où le solvant comprend un ou plusieurs sélectionnés dans le groupe consistant en les suivants : carbonate de propylène (PC), carbonate d'éthylène (EC), carbonate de butylène (BC), carbonate de diéthyle (DEC), carbonate de diméthyle (DMC), carbonate de dipropyle (DPC), propionate de méthyle (MP), diméthylsulfoxyde, diméthoxyéthane, diéthoxyéthane, tétrahydrofurane, N-méthyl-2-pyrrolidone (NMP), carbonate d'éthylméthyle (EMC), carbonate de vinylène (VC), gamma-butyrolactone (GBL), carbonate de fluoroéthylène (FEC), formate de méthyle, formate d'éthyle, formate de propyle, acétate de méthyle, acétate d'éthyle, acétate de propyle, acétate de pentyle, propionate de méthyle, propionate d'éthyle, propionate d'éthyle et propionate de butyle.

7. Procédé de préparation d'un électrolyte solide polymère selon la revendication 1, où le séchage de la couche de revêtement est effectué à une température inférieure ou égale à 150 °C.

8. Électrolyte solide polymère obtenable par un procédé selon la revendication 1, comprenant un polymère et un sel de lithium,

où l'épaisseur de l'électrolyte solide polymère va de 23 $\mu$m à 35 $\mu$m et
où l'écart d'épaisseur de l'électrolyte solide polymère est inférieur ou égal à 0,7 $\mu$m, l'écart d'épaisseur étant

calculé sur la base de l'écart entre l'épaisseur au point le plus épais et l'épaisseur au point le plus mince parmi les épaisseurs mesurées à un total de 9 points désignés dans un échantillon de l'électrolyte solide polymère découpé à l'emporte-pièce et d'une taille de 3*3 $cm^2$.

**9.** Électrolyte solide polymère selon la revendication 8, où l'électrolyte solide polymère est sous la forme d'un film autoporté,
où la conductivité ionique de l'électrolyte solide polymère va de 1,2 x $10^{-5}$ à 4,5 x $10^{-5}$ S/cm, la conductivité ionique étant mesurée à 80 °C.

**10.** Batterie tout solide comprenant l'électrolyte solide polymère de la revendication 8.

【Figure 1】

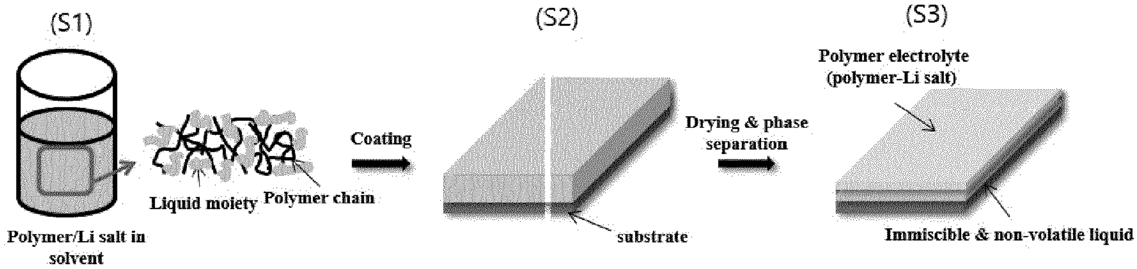


【Figure 2】

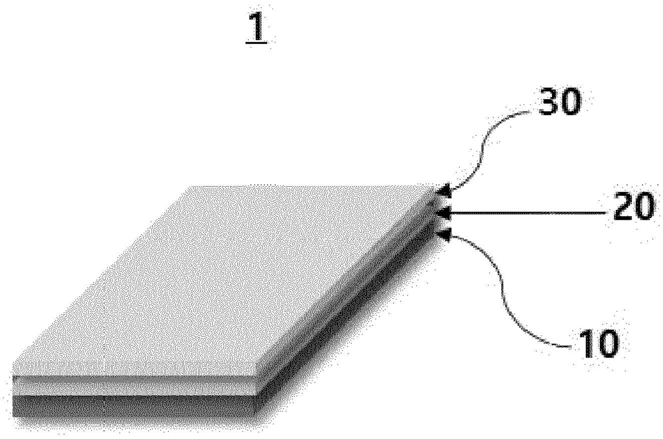

【Figure 3】

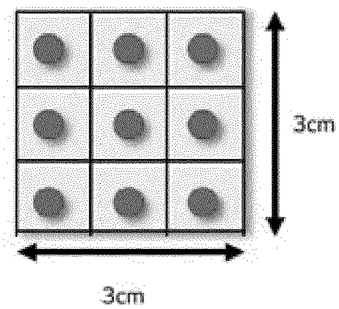

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020526897 A
- WO 2021193023 A1
- US 2016087306 A1
- KR 20140027671 A
- KR 20160024610 A
- KR 20210114415 A